# EUROPEAN PATENT APPLICATION

(11) **EP 1 206 913 A1**
(43) Date of publication of application: **22.05.2002**
(21) Application number: 00870274.8
(22) Date of filing: 17.11.2000
(51) Int. Cl.: A23L 1/22, A21D 2/16, A21D 2/14, A21D 10/00

(54) **Flavoured bread improver**

(71) Applicant: PURATOS N.V., 1702 Groot-Bijgaarden (BE)
(72) Inventor: Cappelle, Stefan Guido Cornelius, 8920 Langemark-Poelkapelle (BE)
(74) Representative: Van Malderen, Joelle

(57) **Abstract**

The present invention is related to a composition being a flavoured bread improver comprising an emulsifier, an encapsulated matrix and a co-emulsifier consisting of a blend of aroma chemicals having co-emulsifier properties.

The present invention is also related to a method for obtaining such composition and to baked products comprising it.

## Description

### Field of the invention

The present invention is related to a flavoured bread improver for the preparation of bakery products and to bakery products comprising said improver.

The present invention is also related to the preparation process of said flavoured bread improver.

### Background of the invention and state of the art

Baked bread products are made of the basic ingredients: flour (mostly wheat or rye flour), water, salt and yeast. Other types of flour (barley, oats, soy, sunflower, cassava and other). The process of baking is subject to a lot of variations due to external (temperature, humidity, handling) and internal (variations of flour and yeast quality) factors.

To obtain a more reliable production process and a constant end product the baker uses ingredients and additives. These products are mostly added as one coformulated product and are known as improvers. These improvers may contain emulsifiers and fats, enzymes, sugars, organic acids, minerals, polysaccharides and proteins. This includes products such as diacetyltartaric acid esters of monoglycerides, lactic acid ester of monoglycerides, monoglycerides, amylases, hemicellulases and pentosanases, oxidases, lipases, proteinases, glucose, fructose, sucrose, ascorbic acid, lactic acid, phosphates, sulphates, guar, locust bean gum, gluten, soy proteins.

Said list is not exhaustive and is presented as an illustration of a possible improver. A mixture of ingredients active in the preparation process of baked goods is called an improver as soon as it contains more than one class of active components mixed together as to optimise by a synergetic effect their performances in the baking process.

The improver can be formulated as a liquid, as a paste or more commonly as a powder. The powdered formulation contains the active ingredients as above-mentioned and usually a carrier substance. The carrier substance is added to the active ingredients in order to dilute them to the suitable concentration. The improver will be added by the baker in a concentration of 0.5 to 20% to the flour.

The most currently used carrier substances are starch, wheat flour or soy flour. The powdered formulation of the improver is very stable, and easy to weigh and to store.

An example of a known improver composition for baking applications is a blend of mono-, di- and triglycerides encapsulated in a mixture of proteins and carbohydrates. In this composition, a co-emulsifier like lecithin or tween is needed to stabilise the emulsion and to ensure optimal activity of the monoglycerides in the final baking application.

Until now, a flavouring composition had to be added on top of above described composition comprising necessarily said co-emulsifier.

The document US-4,424,135 describes an emulsifier system for the tertiary recovering of oil.

### Aims of the invention

The present invention aims to provide a new flavoured bread improver composition that contains less active ingredients than the compositions of the state of the art while maintaining technical properties and organoleptic properties in a bakery product.

### Summary of the invention

The present invention is related to a flavoured bread improver comprising an emulsifier, an encapsulated matrix and a co-emulsifier consisting of a blend of aroma chemicals having co-emulsifier properties.

Preferably, said emulsifier is a blend of mono-, di- and triglycerides.

The blend of aroma chemicals used in the present invention is a blend of typical alcohol produced during yeast fermentation like iso-amylalcohol, iso-butanol, phenylalcohol (preferably in the proportion 1:5:1) or other alcohols containing more than 3 carbon atoms (and preferably less than 10 carbon atoms), possibly combined with minor aromatic components.

In the composition according to the invention, the encapsulated matrix is advantageously a mixture of proteins and carbohydrates suitable to encapsulate the emulsifier and the blend of aromas working as a co-emulsifier.

In the composition according to the invention, it is not necessary to add an usual co-emulsifier, like lecithin or an element selected from the group consisting of polyoxyethylene sorbitan monooleate and polyoxoethylene sorbitan monostearate.

The stabilisation of the emulsion is unexpectedly obtained by said blend of aroma chemicals that are unexpectedly adequate for obtaining a stabilisation of the emulsion and to insure advantageously the optimal activity of the monoglycerides in baking applications.

Furthermore, the composition according to the invention can be used as a powdered and flavoured improver with controlled release properties due to the encapsulation and the high melting point of the monoglycerides.

Another aspect of the present invention is related to a powder formulation of the improver according to the invention (possibly combined with carriers or other active ingredients) by spray-drying of a stable emulsion comprising the improver composition according to the invention, and to a baked product comprising said powder formulation or said improver composition with other known usual food ingredients.

It has also been observed that the baked products show improved flavour retention, because the blend of aroma chemicals is stabilised within the encapsulated solidified monoglycerides in the improver composition according to the invention.

Preferably, the improved flavouring composition according to the invention is obtained by the following method:
- emulsifiers, being preferably monoglycerides or a blend as above-described, are heated until they are melted,
- the proteins and carbohydrates are mixed in an aqueous phase to form an aqueous solution,
- a blend of aroma chemicals is added to the emulsifiers just before the addition of said aqueous solution of proteins and carbohydrates,
- a final emulsion is obtained by passing said blend through an homogeniser, a stable emulsion being thus formed,
- this emulsion is then possibly spray-dried, resulting in a stable encapsulated flavoured composition.

Said spray-dried composition can then be added to usual ingredients of baked products and its activity in the baking tests is comparable to the one of the compositions with normal co-emulsifiers. However, the retention of the flavour in the baked product is improved compared to an on top addition of a flavour as proposed in the state of the art.

Another aspect of the present invention is the use of said blend of aroma chemicals as an emulsifier, preferably in a bread improver composition.

The present invention will be described in details in the following non-limiting examples.

### Examples

### Example 1

A normal emulsifying system (or composition) with lecithin as co-emulsifier is compared with the new composition according to the invention comprising a blend of aroma chemicals as co-emulsifier.

The composition of the blend of chemicals (AC1) is iso-butanol, iso-amylalcohol and phenylalcohol in the proportion 1:5:1.

This flavour simulates a typical yeast sponge flavour.

| Composition: | | |
|---|---|---|
| | Normal form | Flavoured form |
| Monoglycerides | 20 | 20 |
| Lecithin | 10 | |
| Flavour AC1 | | 10 |
| Water | 50 | 50 |
| Ca-caseinates | 2.5 | 2.5 |
| Maltodextrines | 17.5 | 17.5 |

The monoglycerides were heated to 80 °C (liquid). The water with the proteins and the maltodextrines were also heated to 80 °C

This mixture was then passed through a homogeniser at 150 bar inlet pressure. In both cases a stable and very fine emulsion was obtained.

This emulsion was dried in a spray drier with inlet temperature of 170 °C and outlet of 90 °C. In both cases a fine powder was obtained.

The following baking tests were performed.

### Results

Very comparable activity is found in both compositions. Due to better retention and stability of the flavour, only 70% of the flavour was needed compared to the on top addition of the flavour on the normal emulsifier system.

### Baking trials

Different dosages are tested: only a minor difference is obtained in the baking trials at 100 g / 100 kg flour.

| Blanc | Normal | Flavoured |
|---|---|---|
| 2450 | 2725 | 2650 |
| | + 11% | + 8% |

### Flavour retention

0.035% of flavour on top of normal formulation 50 g (0.01%), 100 g (0.02), 150 g (0.03), 200 g (0.04).

The flavours were equal somewhere between 100 and 150 g of flavoured improver. This is in fact about 0.025% of flavour in the formulation. This means that only 70% of the usual concentration of flavour should be added.

## Claims

1. Composition being a flavoured bread improver comprising an emulsifier, an encapsulated matrix and a co-emulsifier consisting of a blend of aroma chemicals having co-emulsifier properties.

2. Composition according to the claim 1, **characterised in that** said emulsifier is a blend of mono-, di- and triglycerides.

3. Composition according to the claim 1 or 2, **characterised in that** the encapsulated matrix is a mixture of proteins and carbohydrates.

4. Composition according to any one of the preceding claims, **characterised in that** the blend of aroma chemicals consists of at least two chemicals preferably selected from the group consisting of alcohols with more than 3 carbon atoms, possibly combined with minor aromatic components.

5. Composition according to the claim 4, **characterised in that** the blend of aroma chemicals consists of iso-amylalcohol, the iso-butanol and the phenylalcohol.

6. Composition according to any one of the preceding claims, **characterised in that** it is an emulsion.

7. Composition according to any one of the preceding claims, **characterised in that** it is a spray-dried composition.

8. Method for obtaining the composition according to any one of the preceding claims, comprising the steps of:
- emulsifiers, being preferably monoglycerides or a blend as above-described, are heated until they are melted,
- the proteins and carbohydrates are mixed in an aqueous phase to form an aqueous solution,
- a blend of aroma chemicals is added to the emulsifiers just before the addition of said aqueous solution of proteins and carbohydrates,
- a final emulsion is obtained by passing said blend through an homogeniser, a stable emulsion being thus formed,
- this emulsion is then possibly spray-dried, resulting in a stable encapsulated flavoured composition.

9. Baked product comprising the composition according to any one of the claims 1 to 7.

10. Use of a blend of aroma chemicals as an emulsifier.
